(19) Europäisches Patentamt / European Patent Office / Office européen des brevets

(11) **EP 4 183 163 B1**

(12) **EUROPEAN PATENT SPECIFICATION**

(45) Date of publication and mention
of the grant of the patent:
**03.06.2026 Bulletin 2026/23**

(21) Application number: **21740233.8**

(22) Date of filing: **12.07.2021**

(51) International Patent Classification (IPC):
*H04W 24/02* *(2009.01)*

(52) Cooperative Patent Classification (CPC):
**H04W 24/02;** H04W 24/10

(86) International application number:
**PCT/IB2021/056246**

(87) International publication number:
**WO 2022/018570 (27.01.2022 Gazette 2022/04)**

(54) **METHOD FOR MANAGING A RADIO ACCESS COMMUNICATIONS NETWORK, AND RADIO ACCESS COMMUNICATIONS SYSTEM OPERATING ACCORDING TO SAID METHOD**

VERFAHREN ZUR VERWALTUNG EINES FUNKZUGANGSKOMMUNIKATIONSNETZES UND NACH DIESEM VERFAHREN BETRIEBENES FUNKZUGANGSKOMMUNIKATIONSSYSTEM

PROCÉDÉ DE GESTION D'UN RÉSEAU DE COMMUNICATION À ACCÈS RADIO ET SYSTÈME DE COMMUNICATION À ACCÈS RADIO FONCTIONNANT SELON LEDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2020 IT 202000017530**

(43) Date of publication of application:
**24.05.2023 Bulletin 2023/21**

(73) Proprietor: **Telecom Italia SpA
20123 Milano (MI) (IT)**

(72) Inventors:
• **MICHELI, Davide
00189 Roma (IT)**
• **MURATORE, Giuliano
00079 Rocca Priora (Roma) (IT)**
• **VANNELLI, Aldo
00189 Roma (IT)**

(74) Representative: **Metroconsult Srl
Foro Bonaparte 51
20121 Milano (IT)**

(56) References cited:
**WO-A1-2013/034197      WO-A1-2019/086099
US-A1- 2020 178 085**

**Description**

Background of the invention

Field of the invention

The present invention refers to a method for managing a radio access communications network.

The present invention also refers to a radio access communications system operating according to said method.

For the sake of simplicity, the radio access communications network will be also referred to as "network" in the following.

Description of the related art

Several network planning tools are known in the art, which are used by network designers for planning radio access communications networks.

Generally, the goal of network planning is ensuring that radio resources are available in respect of a set of network services in a target geographical area. The goal is reached if, in each area element (pixel) of the target geographical area, the following conditions are met:

- a generic mobile terminal receives network's common channel signals with a sufficient quality (this being a precondition for allowing the mobile terminal perceiving the presence of the network and selecting the network cell to attach to);
- the signals transmitted in uplink by the mobile terminal are received with a sufficient quality by the transceiver station of the network;
- the signals transmitted in downlink by the transceiver of the network are received with a sufficient quality by the mobile terminal.

Generally, network planning may involve having a network manager running a "drive test" to collect measures from the network useful to identify areas where the same network exhibits criticalities (e.g. areas wherein call drops occur due to the absence of the network signal or to pilot pollution). The latter, in 3G technology as example, is a phenomenon that takes place when the number of different transceiver station signals received in a generic pixel with a strength above the macrodiversity threshold, and for which the energy to noise and interference ratio of the Common PIlot CHannel, CPICH, is higher than a predetermined threshold, exceeds the maximum number of transceiver stations to which the generic mobile terminal can connect in macrodiversity. The concept of Pilot Pollution is a general concept that holds in 4G and 5G too. In 4G and 5G the problems arise when several eNodeB cells are measured in a certain pixel with similar value of RSRP (Reference Signal Received Power) without a dominating serving cell.

Using the collected measures, the network manager performs a network simulation exploiting an automated network planning tool; if the results of the simulation activity shows similar criticalities as those evidenced by the measures collected by means of the drive test, then the network manager, using the network planning tool, examines drive test results and the possible radio network optimization actions to be made to the deployed network, evaluating the effects thereof on the global network performance. The network manager then selects the setting changes that represents a good trade-off in terms of costs-benefits, and the deployed network is modified accordingly. Then, running a new drive test, the effectiveness of the changes is evaluated.

Another option currently available to network managers consists in mathematical propagations models, defined starting from a theoretical free-space propagation scenario and applying adjustments based on the expected attenuation caused by various elements present in the propagation environment (e.g. trees, buildings, billboards, etc.). Once a propagation model is finalized, it can be applied to a different geographical area, having substantially the same morphological features, possibly making further adjustments based on specific characteristics of the area considered. An example of this approach is provided by the Okumura-Hata models, disclosed for example in I. Schneider at al. "Enhancement of the Okumura-Hata propagation model using detailed morphological and building data," Proceedings of PIMRC '96 - 7th International Symposium on Personal, Indoor, and Mobile Communications. 2002, DOI: 10.1109/PIMRC.1996.567508, and in Masaharu Hata, "Empirical Formula for Propagation Loss in Land Mobile Radio Services," IEEE Transaction on Vehicular Technology, Vol VT- 29, N 03, 1990.

Document US 2020/178085 A1 discloses measurement-based wireless communications network design.

Document WO 2019/086099 A1 discloses network access node and methods thereof.

Summary of the invention

The invention is defined by the independent claims.

Further embodiments are shown in the dependent claims.

The Applicant observes that network planning based on drive tests is expensive, time consuming and virtually impossible to perform on a large scale. Furthermore, this approach shows inherent limitations, in that field measurements cannot be made at the same time in different spots (typically only one vehicle equipped with the measurement tools is employed, which constantly moves from one place to another one, and obviously it needs some time for reaching a new location), and cannot be made with continuity in time, but only in time slots in which the equipped vehicle is available and used.

Regarding network planning based on theoretical calculations by means of mathematical models, the Applicant observes that this technique often does not lead to satisfactory results, since it is almost impossible to mathematically describe environments (especially morphologically complex environments, such as the urban ones) in a locally accurate way. The electromagnetic field propagation attenuation coefficients estimated in this way are affected by intrinsic uncertainties due to approximations and assumptions of the models. The models, in fact, have to be applicable in a range of apparently homogeneous scenarios wherein, however, a number of non-measurable (or hardly measurable) factors strongly affect the field propagation.

The Applicant also observes that the theoretical models provided by the scientific literature define static scenarios in time, that thus cannot take into consideration time evolution of propagation conditions.

Once a radio access communications network has been planned and deployed, the operator has the need to continuously - or at least periodically - check the coverage service provided to the users; based on this checking activity, modifications/improvements to the network can be applied (e.g. regulation of network parameters, installation of new antennas, removal of underused antennas, etc.).

The Applicant has verified that also the checking activity performed after deployment has to be based on a reliable knowledge of the current radio coverage situation. Otherwise, network correction, modification and upgrade operations might bring little result - not because of a poor quality of the operations per se, but because of inaccuracy of the data used to design such operations.

In view of the above, the Applicant has identified the need to provide a network managing technique which is based on reliable data as to the actual network coverage.

In the Applicant's view, this technique should take advantage of widespread and continuous-in-time measurements, which provide an accurate starting point as well as an accurate feedback on the network coverage. Such feedback can then be advantageously employed both for network planning and for network organizing; in the latter case, in particular, the technique can be used as a basis for a continuous/periodical check on the network coverage so as to modify, when necessary, the radio access network in order to meet, over time, predefined radio coverage targets.

Accordingly, the invention aims to provide a method for managing a radio access communications network and a radio access communications system, based on a substantially continuous (or at least periodical) detection of radio coverage conditions in a determined geographical area, and a correspondent continuous (or at least periodical) verification of possible need of modifications to the network, in order to provide, over time, a radio coverage service which meets determined quality thresholds.

An aspect of the present invention relates to a method for managing a radio access communications network.

According to an embodiment of the present invention, the method comprises receiving, from each of a plurality of mobile user terminals in a determined geographical area, at least one report signal.

According to an embodiment of the present invention, said at least one report signal includes a first data item representative of a geographical position of said mobile user terminal.

According to an embodiment of the present invention, said at least one report signal includes a second data item representative of a power at which transmission signals, sent by said radio access communications network, are received by said mobile user terminal.

According to an embodiment of the present invention, the method comprises making first comparisons between a power at which said transmission signals are transmitted, and said second data items.

According to an embodiment of the present invention, the method comprises determining a radio coverage map of said determined geographical area based on said first data items and said first comparisons.

According to an embodiment of the present invention, the method comprises making a second comparison between said radio coverage map and reference data.

According to an embodiment of the present invention, the method comprises applying modifications to said radio access communications network based on said second comparison.

According to an embodiment of the present invention, said reference data are representative of a minimum acceptable radio coverage in at least a portion of said determined geographical area.

According to an embodiment of the present invention, said report signals are sent from said mobile user terminals according to the Minimization of Drive Test, MDT, technology.

According to an embodiment of the present invention, determining said radio coverage map comprises:

dividing said geographical area into a plurality of pixels, each associated with respective geographical coordinates;

associating, to each pixel, respective mobile user terminals whose geographical position is within such pixel;

determining a radio coverage parameter for each pixel based on the second data items included in the report signals transmitted by said respective mobile user terminals.

According to an embodiment of the present invention, the geographical coordinates associated to each pixel comprise the geographical coordinates of a centroid of such pixel.

According to an embodiment of the present invention, the radio coverage parameter of a determined pixel is a function of one or more of the following variables:

- a distance from a radio base station which serves said determined pixel and which has received the report signals;
- a frequency at which said transmission signals are transmitted;
- time.

According to an embodiment of the present invention, the radio coverage parameter of a determined pixel is indicative of an electromagnetic pathloss between a radio base station which serves said determined pixel and a generic position within said determined pixel.

According to an embodiment of the present invention, the steps of:

- receiving report signals from mobile user terminals;
- making the first comparisons;
- determining the radio coverage map;
- making the second comparison;
- applying modifications to the radio access communications network;

are repeated in time.

According to an embodiment of the present invention, the modifications to said radio access communications network include modifications to a radiation pattern of one or more antennas of said radio access communications network.

According to an embodiment of the present invention, said radio access communications network is a Self-Organizing Network, SON, the latter comprising a control unit configured to automatically apply said modifications based on the report signals.

According to an embodiment of the present invention, the method comprises providing said control unit with an artificial intelligence agent, the latter being configured to apply said modifications to said radio access communications network, based on said report signals.

According to an embodiment of the present invention, said managing the radio access communications network comprises planning and/or organizing said radio access communications network.

An aspect of the present invention relates to a radio access communications system.

According to an embodiment of the present invention, the radio access communications system comprises a radio access communications network.

According to an embodiment of the present invention, the radio access communications system comprises a control unit.

According to an embodiment of the present invention, the control unit is configured for receiving, from each of a plurality of mobile user terminals in a determined geographical area, at least one report signal.

According to an embodiment of the present invention, said at least one report signal includes a first data item representative of a geographical position of said mobile user terminal.

According to an embodiment of the present invention, said at least one report signal includes a second data item representative of a power at which transmission signals, sent by said radio access communications network, are received by said mobile user terminal.

According to an embodiment of the present invention, the control unit is configured for making first comparisons between a power at which said transmission signals are transmitted, and said second data items.

According to an embodiment of the present invention, the control unit is configured for determining a radio coverage map of said determined geographical area based on said first data items and said first comparisons.

According to an embodiment of the present invention, the control unit is configured for making a second comparison between said radio coverage map and reference data.

According to an embodiment of the present invention, the control unit is configured for applying modifications to said radio access communications network based on said second comparison.

Brief description of the drawings

Further features and advantages will appear more clearly from the detailed description of preferred and non-exclusive embodiments of the invention. This description is provided hereinafter with reference to the accompanying illustrative and non-limiting figures, in which:

- Figure 1 is a block diagram schematically representing an environment in which the present invention can be employed;
- Figure 2 is a block diagram schematically representing the connection between a radio base station and a mobile user terminal;
- Figure 3 is a flowchart schematically representing steps included in a preferred embodiment of the method according to the present invention.

Description of embodiments of the present invention

With reference to the accompanying figures, reference numeral 100 identifies a radio access communications network in which the invention can be implemented.

Radio access communications network 100 comprises a plurality of radio base stations RBS, spread over a territory so as to cover a determined geographical area GA in which radio coverage must be provided.

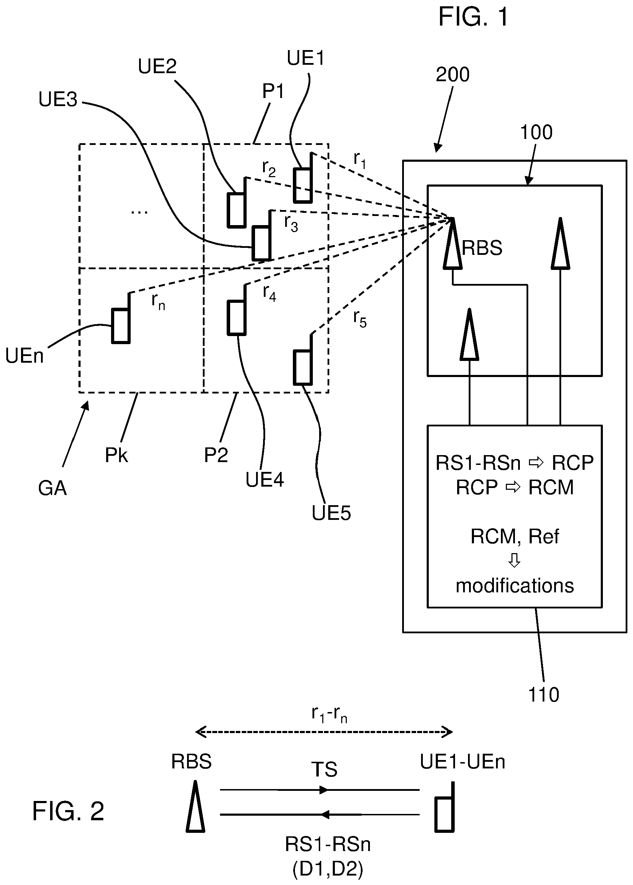

Radio base stations RBS are connected to a control structure which handles radio traffic to and from radio base stations RBS. The control structure, which may include both apparatuses installed at the radio base stations RBS and in remote locations, is herein generally referred to as control unit 110. The latter is per se known and will not be disclosed in detail in the following. The assembly of the radio access network 100 and the control unit 110 forms a radio access communications system 200 (fig. 1).

For the sake of simplicity, only one radio base station RBS will be considered in the following. However, it has to be noted that the following description applies to a radio access communications network including a plurality of radio base stations.

Radio base station RBS exchanges radio signals with a plurality of mobile user terminals UE1, UE2, ..., UEn.

Mobile user terminals UE1, UE2, ..., UEn comprise, for example, smartphones and/or tablets.

Mobile user terminals UE1, UE2, ..., UEn can move (typically carried by respective users) in the determined geographical area GA, and possibly outside the latter; mobile user terminals UE1, UE2, ..., UEn and the control unit 110 are configured for maintaining a radio link between each mobile user terminal UE1, UE2, ..., UEn and at least one radio base station RBS, so as to provide mobile connectivity and mobile services to the users.

Signals exchanged by the radio base station RBS and the mobile user terminals UE1, UE2, ..., UEn include both signalling for creating, maintaining and managing the connection between the mobile user terminals UE1, UE2,..., UEn and the network, and actual data exchanged by users.

Signals sent from the mobile user terminals UE1, UE2, ..., UEn comprise report signals RS1, RS2, ..., RSn (figure 2).

Each report signal RS1, RS2, ..., RSn includes a first data item D1 and a second data item D2.

The first data item D1 is representative of a geographical position of the respective mobile user terminal.

For example, the first data item D1 can comprise or consist of coordinates generated by a localization module of the mobile user terminal, e.g. based on reception of signals from a GNSS (Global Navigation Satellite System) such as the GPS (Global Positioning System).

The second data item D2 is representative of a power at which transmission signals TS, sent from the radio access communications network 100, and in particular by the radio base station RBS, are received by the mobile user terminal.

For example, the transmission signals TS can consist of or comprise downlink pilot and/or reference signals.

For example, each mobile user terminal UE1, UE2, ..., UEn performs a downlink pilot strength measurement in order to generate the second data item D2 to be inserted in the report signals RS1, RS2, ..., RSn.

Preferably, the report signals RS1, RS2, ..., RSn are sent from the mobile user terminals UE1, UE2, ..., UEn when the latter are in idle mode and, periodically, in connected mode.

Preferably, the report signals RS1, RS2, ..., RSn are sent from the mobile user terminals UE1, UE2, ..., UEn according to the Minimization of Drive Test, MDT, technology. Such technology is standardized by ETSI and disclosed in technical specification 3GPP TS 37.320; for example, version 15.0.0 (2018-06) can be taken into consideration. Said technical specification is herein incorporated by reference.

Preferably, the second data item D2 included in each report signal RS1, RS2, ..., RSn can include one or more of the following:

- Reference Signal Received Power, RSRP;
- Reference Signal Received Quality, RSRQ;
- Received Signal Code Power, RSCP;
- Energy to Noise ratio, Ec/No;
- Primary Common Control Physical Channel Received Signal Code Power, P-CCPCH RSCP;
- Received Signal Level, RxLev;
- Pilot Pseudorandom Noise Phase;
- Pilot Strength.

In particular:

if the radio access communications network 100 is an Evolved Universal Terrestrial Radio Access (E-UTRA), both RSRP and RSRQ are preferably used;
if the radio access communications network 100 is a Universal Terrestrial Radio Access - Frequency Division Duplex (UTRA-FDD), both RSCP and Ec/No are preferably used;
if the radio access communications network 100 is a Universal Terrestrial Radio Access 1.28 Mcps Time Division Duplex (UTRA 1.28 Mcps TDD), P-CCPCH RSCP is preferably used;
if the radio access communications network 100 is a GSM EDGE Radio Access Network (GERAN), RxLev is preferably used;
if the radio access communications network 100 is a Code Division Multiple Access 2000 (CDMA2000) network, both Pilot PN Phase and Pilot Strength are preferably used, if the serving cell is a EUTRAN cell;
if the radio access communications network 100 is a 5G network, both RSRP and RSRQ are preferably used.

As said, the transmission signals TS are sent from the radio base station RBS to the mobile user terminals UE1, UE2, ..., UEn.

Thus, the power at which the transmission signals TS are sent is known to the network.

Control unit 110 is configured to make first comparisons between the power at which the transmission signals TS are sent and the reception power indicated by the second data items D2 included in the report signals RS1, RS2, ..., RSn.

In particular, the power at which a determined transmission signal TS is sent is compared with the second data item D2 included in the report signal transmitted by the mobile user terminal that has received such determined transmission signal TS.

In this way, the control unit 110 can determine whether, in a determined geographical position, the propagation of the electromagnetic field (i.e. the propagation of each transmission signal TS) is closer to a free-space condition or some obstacles cause additional attenuation. In general terms, the control unit 110 can determine the quality of radio coverage in the specific points in which mobile user terminals UE1, UE2, ..., UEn are located.

Taking advantage of the information included in the report signals RS1, RS2, ..., RSn the control unit 110 can calculate the coverage condition of the determined geographical area GA.

In particular, based on the first data items D1 and the first comparisons, the control unit 110 determines a radio coverage map RCM of the determined geographical area GA.

Preferably, in order to determine the radio coverage map RCM, the determined geographical area GA is divided into a plurality of pixels P1, P2, ..., Pk.

Each pixel P1, P2, ..., Pk can be defined as a geographical zone having dimensions smaller than the determined geographical area GA and entirely included in the same determined geographical area GA. The assembly of all the pixels P1, P2, ..., Pk forms the determined geographical area GA.

Each pixel P1, P2, ..., Pk can have a substantially square or rectangular shape as pixel definition; the side of such square or rectangular shape can be included, for example, between 1m and 200m.

Each pixel P1, P2, ..., Pk is associated with respective geographical coordinates such as, for example, the geographical coordinates of a centroid of each pixel.

Each pixel P1, P2, ..., Pk is associated with respective mobile user terminals, whose geographical position is within such pixel P1, P2, ..., Pk.

As schematically shown in figure 1, pixel P1 is associated with mobile user terminals UE1, UE2, UE3, whereas pixel P2 is associated with mobile user terminals UE4, UE5.

Control unit 110 determines a radio coverage parameter RCP for each pixel P1, P2, ..., Pk based on the second data items D2 included in the report signals RS1, RS2, ..., RSn transmitted by the respective mobile user terminals UE1, UE2, ..., UEn.

Back to the example of figure 1, the radio coverage parameter RCP for pixel P1 is calculated based on the report signals RS1, RS2, RS3 sent from mobile user terminals UE1, UE2, UE3, and the radio coverage parameter RCP for pixel P2 is calculated based on the report signals RS4, RS5 sent from mobile user terminals UE4, UE5.

Advantageously, the radio coverage parameter RCP of a determined pixel P1, P2, ..., Pk is a function of one or more of the following variables:

- a distance $r_1$, $r_2$, ..., $r_n$ from a radio base station RBS to each user terminal UE1, UEn within each pixel P1, P2, ..., Pk, such radio base station RBS having received the report signals RS1, RS2, ..., RSn;
- a frequency f at which the transmission signals TS are transmitted;
- time t.

The radio coverage parameter RCP of a determined pixel P1, P2, ..., Pk is indicative of an electromagnetic pathloss between the radio base station RBS which serves said determined pixel P1, P2, ..., Pk and said determined pixel P1, P2, ..., Pk, the latter being preferably identified - as said - by the coordinates x,y of its centroid.

In the example of figure 1, all the pixels P1, P2, ..., Pk are served by the radio base station RBS. Accordingly, distance $r_i$ (i=1...n) represents the distance from the radio base station RBS to each user terminal UE1, UE2, ..., UEn.

Let $P_{tx}$ be the power at which radio base station RBS sends a certain transmitting signal TS, and $P_{rx}$ the power at which such transmitting signal TS is received by a certain mobile user terminal at a certain frequency, at a certain time, the mobile user terminal being located at a distance r from the radio base station RBS.

A relationship between $P_{tx}$ and $P_{rx}$ can be expressed by the following equation:

$$P_{rx} = P_{tx} \frac{G_{tx}(r,\alpha,\vartheta)G_{rx}(r,\alpha,\vartheta)}{(Cell\ antenna\ Cable\ loss)(4\pi f)^2 r^2 \gamma(\text{r,f,t})} (3 \cdot 10^8)^2 \qquad (1)$$

wherein:

$\alpha$, $\vartheta$ identify the azimuth and tilt, respectively, of the transmission and reception antennas (radio base station and mobile user terminal) at a geometric distance r between them;

$G_{tx}$ and $G_{rx}$ are the antenna gains of the transmitter (radio base **station)** and receiver (mobile user terminal);

$f$ is the frequency of the electromagnetic field;

$r$, as said, is the distance between the radio base station and the mobile user terminal;

*"Cell antenna Cable loss"* is a known parameter representative of cable power loss at the radio base station;

$3 \cdot 10^8$ represents the speed of light in m/s, i.e. the speed at which the electromagnetic field propagates;

$(4\pi f)^2 r^2$ represents the free space pathloss, i.e. the power loss along distance r simply due to natural electromagnetic field attenuation;

$\gamma(\text{r,f,t,})$ represents the additional pathloss, i.e. the pathloss due to the presence of obstacles between the radio base station and the mobile user terminal.

Additional pathloss $\gamma(\text{r,f,t,})$ is the aforementioned radio coverage parameter RCP.

All the other terms included in equation (1) are known: *Cell antenna Cable loss* can be measured at the radio base station RBS; $G_{tx}$ is a characteristic parameter of the radio base station RBS.

Regarding $G_{rx}$, it has to be noted that several brands/models of mobile are available on the market, and the mobile user terminal antenna gain $G_{rx}$ is typically unknown. However, 3GPP specifications defining the 3G, 4G and 5G standards establish specific limits to measurement uncertainty for mobile terminals. For example, technical specification TS 36.133 V13.4.0 can be considered: in section 9.1.2.2, relative accuracy of RSRP for 4G is defined; in particular, Table 9.1.2.2-1 indicates specific ranges for the accuracy to be fulfilled.

The Applicant observes that these constraints for measurement accuracy are sufficient in order to significantly reduce uncertainties due to mobile user terminal antenna gain and so relative uncertainties in the measurements of received power.

Furthermore, the Applicant notes that mobile user terminal antenna gain or in more general definition the RF reception system causes variations in the received power $P_{rx}$ which are typically much smaller than those caused by other factors (i.e. electromagnetic field fading phenomenon).

In view of the above, the Applicant believes that, without lack of generality, the mobile user terminal antenna gain $G_{rx}$ can be set equal to one.

In one embodiment, the relative difference in the RF reception system performances for different brands/models of terminal devices can be estimated, thus creating a database containing such information for certain mobile user terminals. Such estimations can be computed, for example, based on Core Network data combined with MDT data provided by different mobile user terminals which, in a determined moment in time, are close to each other: since the electromagnetic field will reach all such terminals with approximately identical power, then, possible differences in received power can be related to differences in the RF reception system performances and consequently in antenna gains $G_{rx}$. Different models/brands for this analysis can be recognized taking advantage of the TAC (Type Allocation Mode) portion of the IMEI (International Mobile Equipment Identity) associated to each mobile user terminal. The Applicant notes that considering only the TAC portion, and not the entire IMEI string of bits, allows the brand/model recognition activity to be compliant from a privacy standpoint.

Accordingly, being $P_{tx}$ and $P_{rx}$ also known (the former from the RBS features, the latter from the second data items D2), the radio coverage parameter RCP can be calculated as follows:

$$\gamma(r, f, t) = \frac{P_{tx}}{P_{rx}} \frac{G_{tx}(r,\alpha,\vartheta) G_{rx}(r,\alpha,\vartheta)}{(Cell\ antenna\ Cable\ loss)(4\pi f)^2 r^2} (3 \cdot 10^8)^2 \qquad (2)$$

Equation (2) can also be expressed as

$$\gamma(r, f, t) = \frac{P_{tx}}{P_{rx}} \frac{1}{known\ parameters} \frac{1}{Freespace\ Pathloss} \qquad (3)$$

wherein:

$$\frac{1}{known\ parameters} = \frac{G_{tx}(r,\alpha,\vartheta) G_{rx}(r,\alpha,\vartheta)(3\cdot10^8)^2}{(Cell\ antenna\ Cable\ loss)}$$

$$\frac{1}{Freespace\ Pathloss} = \frac{1}{(4\pi f)^2 r^2}$$

If the measurement unit is dB, equation (3) is expressed as follows:

$$\gamma(r, f, t)(dB) = P_{tx}(dBm) - P_{rx}(dBm) - known\ parameters\ (dB)$$
$$- Freespace\ Pathloss\ (dB)$$

Thus, the mobile user terminals of a specific pixel can provide power measurements in specific points within such pixel - i.e. the positions in which the mobile user terminals are located when receiving the transmission signals. By means of average and interpolation operations, the control unit 110 can calculate the radio coverage parameter RCP function for the pixel under examination.

Thus each pixel P1, P2, ..., Pk can be represented by a cell in a multidimensional numerical matrix (coordinate-x, coordinate-y, time and frequency) to be available for the propagation models of radio mobile networks with the aims to improve the level of confidence of the electromagnetic territorial coverage forecasts for mobile devices.

As said, each pixel P1, P2, ..., Pk is associated to a respective radio coverage parameter RCP. In other words, after the radio coverage parameter RCP has been calculated, it allows to estimate the radio coverage available for each user terminal device that is possibly located within the respective pixel.

The Applicant notes that the radio coverage parameter RCP disclosed hereabove (i.e. calculated for each pixel) can be advantageously used in cooperation with certain network planning tools, which are also pixel-based and can thus take full advantage of the information provided by the radio coverage parameter RCP.

The values of the radio coverage parameter RCP, and so the propagation coefficient and the cellular radio coverage computation thus obtained, can vary over time and space due to changes of local environmental factors such as rainfall, presence of vehicles, humidity, change in the state of vegetation, etc. A geographical database of radio coverage parameters for each pixel and so the propagation coefficient, can be built for each propagation environment topology, such as urban, extra urban, rural, etc. as function of time.

It has to be noted that the position (i.e. geographical coordinates) of the radio base station RBS is *a priori* know; accordingly, based on the first data items D1, the distance between the radio base station RBS and the mobile user terminals UE1, UE2, ..., UEn can be determined.

In addition or as an alternative, the distance r can be calculated by using TA (Timing Advance).

As an example in 4G, a single TA step is calculated in meters as follows (reference can be made to *3GPP TS*

*36.321 v.12.10.0, 3GPP TS 36.300 v.12.10.0* and A. Scaloni et al. "Multipath and Doppler Characterization of an Electromagnetic Environment by Massive MDT Measurements From 3G and 4G Mobile Terminals" - IEEE Access (Volume: 7), 21 January 2019, Page(s): 13024 - 13034. DOI: 10.1109/ACCESS.2019.2892864):

$$TA_{step} = 16 \cdot T_s \cdot \frac{c}{2} = 78 \text{ m}$$

where $T_s$ is the LTE symbol time:

$$T_s = (15 \text{ kHz} \cdot 2048)^{-1} = 32.6 \text{ ns}$$

The following table shows a mapping between the reported values of Timing Advance (values included between 0 and 1282) and the actual measured values (divided in intervals, each having a length equal to $TA_{step}$); the unit of measurement, as indicated in the rightmost column, is meters.

MAPPING OF LTE TIMING ADVANCE

| Reported value | Measured quantity value | Unit |
|---|---|---|
| 0 | TA < 78 | M |
| 1 | 78 ≤ TA < 156 | M |
| 2 | 156 ≤ TA < 234 | M |
| ... | ... | ... |
| 1281 | 99918 ≤ TA < 99996 | M |
| 1282 | 99996 ≤ TA | M |

A reported value of TA means that the measured value falls in an interval with uniform probability. Taking the mid-point of each interval, an offset of 39 meters is applied, so the one-way distance in meters between a mobile user terminal and a radio base station can be estimated as:

$$D^{est} = 39 + (TA \cdot 78)$$

Therefore, the uncertainty of TA is ±39 m.

The Applicant observes that the absolute difference between the distance calculated based on geographical coordinates and the distance calculated based on TA represents an indication of radio multipath phenomena which typically affect Non-line-of-sight (NLOS) urban radio propagation.

Advantageously, sending the transmission signals TS, receiving the report signals RS1, RS2, ..., RSn and calculating the RCP function for each pixel are repeated in time. Accordingly, radio coverage can be dynamically determined and evaluated over time.

In more detail, the report signals RS1, RS2, ..., RSn are available with substantial continuity: generally speaking, mobile devices are almost often attached to the network and can thus provide a substantial real-time description of the radio coverage condition of the area in which they are located. By continuously/periodically processing this extremely useful information, it is possible to continuously/periodically verify the actual radio coverage conditions and apply, whenever necessary, modifications to the network in order to improve the situation. The control unit 110 is further configured to determine a radio coverage map RCM of the determined geographical area GA.

In order to determine said radio coverage map RCM, the control unit 110 takes advantage of the first comparisons (i.e. the comparisons between the transmitted power and the received power) and the first data items D1 included in the report signals RS1, RS2, ..., RSn (i.e. the geographical position of the mobile user terminals).

From a practical point of view, the control unit 110 calculates the radio coverage parameter RCP - i.e. the $\gamma(r,f,t,)$ function - for each pixel P1, P2, ..., Pk and then, by combining all the radio coverage parameters, the radio coverage map RCM is obtained.

According to the invention, a second comparison is made between the radio coverage map RCM and reference data Ref.

Preferably, the reference data Ref are representative of a minimum acceptable radio coverage in at least a portion of the determined geographical area GA. In particular, the reference data Ref represent the minimum acceptable radio coverage in substantially the whole determined geographical area.

By the second comparison, the control unit 110 can determine whether the radio coverage currently provided is satisfactory or not. In the latter case, modifications can be applied to the radio access communications network 100 in order to improve the connectivity service provided to the mobile user terminals UE1, UE2, ..., UEn.

For example, modifications to the radio access communications network 100 can include modifications of radiation pattern of one or more antennas of the same radio access communications network.

For example, modifications to the radio access communications network 100 can include installation of new antennas, e.g. in areas wherein coverage needs to be significantly improved.

In general terms, the Applicant observes that the technique disclosed herein can be advantageously employed for network planning (i.e. for designing/improving network deployment) and/or for network organizing (i.e. after deployment is completed, in order to continuously/periodically verify that the radio coverage satisfies determined criteria and - if necessary - apply modifications).

In one embodiment, the radio access communications network 100 is a Self-Organizing Network, SON; thus, the modifications can be automatically carried out by the control unit 110.

In one embodiment, the control unit 110 can be provided with an artificial intelligence agent, configured to process the report signals RS1, RS2, ..., RSn and generate outputs to apply modifications to the radio access communications network 100. For example, the artificial intelligence agent can execute machine learning algorithms, so as to progressively improve the accuracy and effectiveness of the outputs.

In this connection, the Applicant notes that traffic in a radio access communications network shows certain behaviors, over time, which can be recognized and advantageously employed for predicting future needs of the customers and thus future settings for the same network.

As said, the radio coverage parameter RCP is preferably repeatedly calculated over time, for example with substantial continuity or with a determined periodicity. Advantageously, also calculating the radio coverage map RCM, making the second comparison and applying modifications to the radio access communications network 100 can be repeated in time. Accordingly, radio coverage can be dynamically adjusted over time so as to adapt the network behavior to the actual coverage conditions detected by the mobile user terminals.

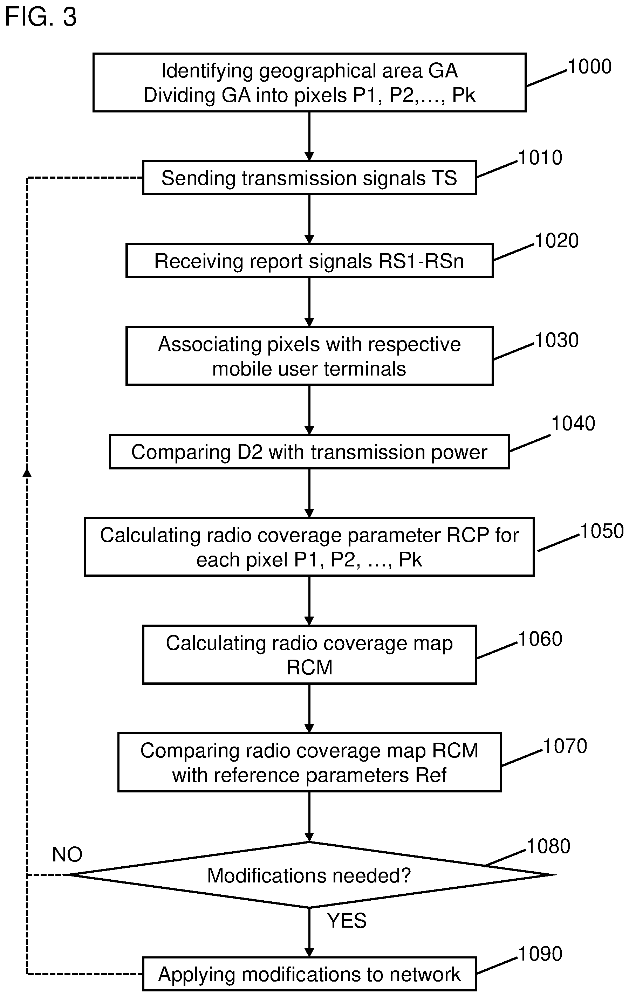

Figure 3 shows a flow chart which illustrates a preferred embodiment of the present invention.

At step 1000, the geographical area GA is identified and divided into pixels P1, P2, ..., Pk.

At step 1010, transmission signals TS are sent from the radio base station RBS to the mobile terminal users UE1, UE2, ..., UEn.

As said, the transmission signals TS can be downlink pilot signals.

At step 1020, the radio base station RBS receives the reporting signals RS1, RS2, ..., RSn.

Each report signal RS1, RS2, ..., RSn includes a first data item D1 (geographical position of the mobile user terminal) and a second data item D2 (power at which the transmission signals TS have been received by the mobile user terminals).

At step 1030, each pixel P1, P2, ..., Pk is associated with the respective mobile user terminals, i.e. the mobile user terminals whose geographical coordinates fall in such pixel.

At step 1040, the second data item D2 of each report signal RS1, RS2, ..., RSn is compared (aforementioned first comparisons) with the power at which the corresponding transmission signal TS was transmitted.

At step 1050, the radio coverage parameter RCP (i.e. $\gamma(r,f,t,)$) is calculated, ad a function of the comparison of step 1040 and the position indicated in the first data item D1. A radio coverage parameter RCP is determined for each pixel P1, P2, ..., Pk.

At step 1060, the radio coverage map RCM is calculated, based on the radio coverage parameters calculated at step 1050.

At step 1070, the radio coverage map RCM is compared (aforementioned second comparison) with reference parameters Ref; the latter are preferably representative of a minimum acceptable radio coverage for the geographical area GA.

At step 1080, based on the comparison of step 1070, it is determined whether modifications to the network are needed:

- in the negative, the diagram goes back to step 1010, so as to begin a new control iteration;
- in the affirmative, at step 1090 modifications are applied to the network; the process then goes back to step 1010.

It has to be noted that the dashed line joining steps 1080, 1090 with step 1010 represents the continuity/periodicity over time of the network managing technique according to the present invention: after a managing iteration is completed (either with step 1080 or with step 1090), the processing flow goes back to step 1010. Accordingly, a new detection of the radio coverage conditions can be performed; this is especially useful in case modifications have been applied, since the impact of such modifications can be evaluated and, in case a satisfactory result (represented by an acceptable matching between the radio coverage map RCM and the reference data Ref) is not achieved, further modifications can be applied.

The Applicant observes that, so far, reference has been made to continuity/periodicity of the network managing activity. This means that the detection and processing of the report signals RS1, RS2, ..., RSn, as well as the comparison of the radio coverage map RCM with the reference data Ref and the application of modifications to the network, can be carried out either with substantial continuity over time, or from time to time (either with a determined periodicity - e.g., once an hour, once a day, etc. - or with intervals of different duration between one control operation and the following).

It has to be noted that, so far, reference to a single radio base station RBS has been made, for the sake of simplicity. Such radio base station RBS is the serving radio base station, i.e. the radio base station which is providing the best coverage to the pixel considered. However, as said above, it is envisaged that the technique disclosed herein can be applied also to multiple radio base station. Furthermore, in one embodiment, one or more of mobile user terminals UE1, UE2, ..., UEn can provide coverage information not only regarding the serving radio base station RBS, but also regarding neighbouring radio base stations. The control unit 110 can thus take into consideration a wider set of data in order to calculate the radio coverage parameter RCP and the radio coverage map RCM.

In general terms, the Applicant observes that the invention may take advantage of electromagnetic field propagation analysis for radio coverage in various contexts (e.g. urban areas, historical centers, seaside, etc.).

The radio coverage parameter RCP establishes propagation coefficients for each local geographical area and the attenuation of radio signals transmitted by the radio base stations to the mobile user terminals is effectively determined.

Accordingly, the overall attenuation of the signals received by the mobile user terminals is determined based on the type of propagation environment (urban, suburban etc.) where the mobile user terminals and the radio base stations are placed.

The concept of radio propagation environment such as rural, urban, dense urban framework and so on, typically characterize portion of territories and cities. For example, central areas of cities are typically full of buildings located close to each other and such environments could be classified as dense urban environment. Most European cities have historical buildings too, with high value of building wall attenuation of radio signal. On the contrary, an area where only few buildings are occasionally located could be classified as rural. Other environments relate to the presence of woods or mountains or lakes, rivers, sea, etc. As a function of the radio propagation environment, there are different electromagnetic fading and pathloss corresponding to different radio propagation coefficients. In this way, each environment can be really mapped with corresponding radio propagation coefficients. Moreover, the broad availability of mobile terminals allows to have quite often a geospatially dense coverage measurement so to grant a valid statistical approach in averaging the reported measurements and in the representativity of the available data.

Since the report signals RS1, RS2, ..., RSn provide real, georeferenced and widespread measurements, the control unit 110 can reliably determine the aforementioned radio coverage map. Such radio coverage map can be usefully employed in the network planning/organizing activity, for example by regulating the radiation patterns in view of the expected needs.

The invention achieves important advantages.

Firstly, the invention provides a network managing technique which is based on reliable data as to the actual network coverage.

Furthermore, the invention takes advantage of widespread and continuous-in-time measurements, thereby obtaining an accurate starting point as well as an accurate feedback on the network coverage.

**Claims**

1. Method for managing a radio access communications network (100), comprising:

   - receiving, from each of a plurality of mobile user terminals (UE1, UE2, ..., UEn) in a determined geographical area (GA), at least one report signal (RS1, RS2, ..., RSn) including:

     - a first data item (D1) representative of a geographical position of said mobile user terminal (UE1, UE2, ...UEn);
     - a second data item (D2) representative of a power at which transmission signals (TS), sent by said radio access communications network (100), are received by said mobile user terminal (UE1, UE2, ..., UEn);

   - making first comparisons between a power at which said transmission signals (TS) are transmitted, and said second data items (D2);
- determining a radio coverage map (RCM) of said determined geographical area (GA) based on said first data items (D1) and said first comparisons;
- making a second comparison between said radio coverage map (RCM) and reference data (Ref);
- applying modifications to said radio access communications network (100) based on said second comparison,

wherein determining said radio coverage map (RCM) comprises:

dividing said geographical area (GA) into a plurality of pixels (P1, P2, ..., Pk), each associated with respective geographical coordinates;
associating, to each pixel (P1, P2, ..., Pk), respective mobile user terminals whose geographical position is within such pixel (P1, P2, ..., Pk);
determining a radio coverage parameter (RCP) for each pixel (P1, P2, ..., Pk) based on the second data items (D2) included in the report signals (RS1, RS2, ..., RSn) transmitted by said respective mobile user terminals (UE1, UE2, ..., UEn).

2. Method according to claim 1 wherein said reference data (Ref) are representative of a minimum acceptable radio coverage in at least a portion of said determined geographical area (GA).

3. Method according to claim 1 or 2 wherein said report signals (RS1, RS2, ..., RSn) are sent from said mobile user terminals (UE1, UE2, ..., UEn) according to the Minimization of Drive Test, MDT, technology.

4. Method according to claim 3 wherein the geographical coordinates associated to each pixel (P1, P2, ..., Pk) comprise the geographical coordinates of a centroid of such pixel (P1, P2, ..., Pk).

5. Method according to anyone of the preceding claims wherein the radio coverage parameter (RCP) of a determined pixel (P1, P2, ..., Pk) is a function of one or more of the following variables:

- a distance from a radio base station (RBS) which serves said determined pixel (P1, P2, ..., Pk) and which has received the report signals (RS1, RS2, ..., RSn);
- a frequency (f) at which said transmission signals (TS) are transmitted;
- time (t).

6. Method according to anyone of the preceding claims wherein the radio coverage parameter (RCP) of a determined pixel (P1, P2, ..., Pk) is indicative of an electromagnetic pathloss between a radio base station (RBS) which serves said determined pixel (P1, P2, ..., Pk) and a generic position within said determined pixel (P1, P2, ..., Pk).

7. Method according to anyone of the preceding claims wherein the steps of:

- receiving report signals (RS1, RS2, ..., RSn) from mobile user terminals (UE1, UE2, ..., UEn);
- making the first comparisons;
- determining the radio coverage map (RCM);
- making the second comparison;
- applying modifications to the radio access communications network (100);

are repeated in time.

8. Method according to anyone of the preceding claims wherein the modifications to said radio access communications network (100) include modifications to a radiation pattern of one or more antennas of said radio access communications network (100).

9. Method according to anyone of the preceding claims, wherein said radio access communications network (100) is a Self-Organizing Network, SON, the latter comprising a control unit (110) configured to automatically apply said modifications based on the report signals (RS1, RS2, ..., RSn).

10. Method according to claim 9 comprising providing said control unit (110) with an artificial intelligence agent, the latter being configured to apply said modifications to said radio access communications network (100), based on said report signals (RS1, RS2, ..., RSn).

11. Method according to anyone of the preceding claims, wherein said managing the radio access communications network comprises planning and/or organizing said radio access communications network.

12. Radio access communications system (200), comprising:

- a radio access communications network (100);
- a control unit (110), configured for:

- receiving, from each of a plurality of mobile user terminals (UE1, UE2, ..., UEn) in a determined geographical area (GA), at least one report signal (RS1, RS2, ..., RSn) including:

- a first data item (D1) representative of a geographical position of said mobile user terminal (UE1, UE2, ...UEn);
- a second data item (D2) representative of a power at which transmission signals (TS), sent by said radio access communications network (100), are received by said mobile user terminal (UE1, UE2, ..., UEn);

- making first comparisons between a power at which said transmission signals (TS) are transmitted, and said second data items (D2);
- determining a radio coverage map (RCM) of said determined geographical area (GA) based on said first data items (D1) and said first comparisons;
- making a second comparison between said radio coverage map (RCM) and reference data (Ref);
- applying modifications to said radio access communications network (100) based on said second comparison,

wherein, in order to determine said radio coverage map (RCM), said control unit (100) is configured for:

dividing said geographical area (GA) into a plurality of pixels (P1, P2, ..., Pk), each associated with respective geographical coordinates;
associating, to each pixel (P1, P2, ..., Pk), respective mobile user terminals whose geographical position is within such pixel (P1, P2, ..., Pk);
determining a radio coverage parameter (RCP) for each pixel (P1, P2, ..., Pk) based on the second data items (D2) included in the report signals (RS1, RS2, ..., RSn) transmitted by said respective mobile user terminals (UE1, UE2, ..., UEn).

**Patentansprüche**

1. Verfahren zum Verwalten eines Funkzugangskommunikationsnetzwerks (100), das Folgendes umfasst:

- Empfangen, von jedem einer Mehrzahl von mobilen Benutzerendgeräten (UE1, UE2, ..., UEn) in einem bestimmten geografischen Gebiet (GA), von mindestens einem Berichtssignal (RS1, RS2, ..., RSn), das Folgendes beinhaltet:

- ein erstes Datenelement (D1), das für eine geografische Position des mobilen Benutzerendgeräts (UE1, UE2, ...UEn) repräsentativ ist;
- ein zweites Datenelement (D2), das für eine Leistung repräsentativ ist, mit der Übertragungssignale (TS), die vom Funkzugangskommunikationsnetzwerk (100) gesendet werden, vom mobilen Benutzerendgerät (UE1, UE2, ..., UEn) empfangen werden;

- Anstellen von ersten Vergleichen zwischen einer Leistung, mit der die Übertragungssignale (TS) übertragen werden, und den zweiten Datenelementen (D2);
- Bestimmen einer Funkabdeckungskarte (RCM) des bestimmten geografischen Gebiets (GA) auf Basis der ersten Datenelemente (D1) und der ersten Vergleiche;
- Anstellen eines zweiten Vergleichs zwischen der Funkabdeckungskarte (RCM) und Referenzdaten (Ref);
- Anwenden von Modifikationen auf das Funkzugangskommunikationsnetzwerk (100) auf Basis des zweiten Vergleichs,

wobei das Bestimmen der Funkabdeckungskarte (RCM) Folgendes umfasst:

Teilen des geografischen Gebiets (GA) in eine Mehrzahl von Pixeln (P1, P2, ..., Pk), von denen jedes mit jeweiligen geografischen Koordinaten verknüpft ist;

Verknüpfen von jeweiligen mobilen Benutzerendgeräten, deren geografische Position innerhalb eines solchen Pixels (P1, P2, ..., Pk) liegt, mit jedem Pixel (P1, P2, ..., Pk);

Bestimmen eines Funkabdeckungsparameters (RCP) für jedes Pixel (P1, P2, ..., Pk) auf Basis der zweiten Datenelemente (D2), die in den Berichtssignalen (RS1, RS2, ..., RSn) beinhaltet sind, die von den jeweiligen mobilen Benutzerendgeräten (UE1, UE2, ..., UEn) übertragen werden.

2. Verfahren nach Anspruch 1, wobei die Referenzdaten (Ref) für eine minimale akzeptable Funkabdeckung in mindestens einem Abschnitt des bestimmten geografischen Gebiets (GA) repräsentativ sind.

3. Verfahren nach Anspruch 1 oder 2, wobei die Berichtssignale (RS1, RS2, ..., RSn) von den mobilen Benutzerendgeräten (UE1, UE2, ..., UEn) gemäß der Minimierung von Antriebstest (MDT)-Technologie gesendet werden.

4. Verfahren nach Anspruch 3, wobei die geografischen Koordinaten, die mit jedem Pixel (P1, P2, ..., Pk) verknüpft sind, die geografischen Koordinaten eines Schwerpunkts der Pixel (P1, P2, ..., Pk) umfassen.

5. Verfahren nach einem der vorhergehenden Ansprüche, wobei der Funkabdeckungsparameter (RCP) eines bestimmten Pixels (P1, P2, ..., Pk) eine Funktion von einer oder mehreren der folgenden Variablen ist:

- einem Abstand von einer Funkbasisstation (RBS), die das bestimmte Pixel (P1, P2, ..., Pk) bedient und die die Berichtssignale (RS1, RS2, ..., RSn) empfangen hat;
- einer Frequenz (f), mit der die Übertragungssignale (TS) übertragen werden;
- Zeit (t).

6. Verfahren nach einem der vorhergehenden Ansprüche, wobei der Funkabdeckungsparameter (RCP) eines bestimmten Pixels (P1, P2, ..., Pk) einen elektromagnetischen Pfadverlust zwischen einer Funkbasisstation (RBS), die das bestimmte Pixel (P1, P2, ..., Pk) bedient, und einer generischen Position des bestimmten Pixels (P1, P2, ..., Pk) anzeigt.

7. Verfahren nach einem der vorhergehenden Ansprüche, wobei die folgenden Schritte:

- Empfangen von Berichtssignalen (RS1, RS2, ..., RSn) von mobilen Benutzerendgeräten (UE1, UE2, ..., UEn);
- Anstellen der ersten Vergleiche;
- Bestimmen der Funkabdeckungskarte (RCM);
- Anstellen des zweiten Vergleichs;
- Anwenden von Modifikationen auf das Funkzugangskommunikationsnetzwerk (100);

in der Zeit wiederholt werden.

8. Verfahren nach einem der vorhergehenden Ansprüche, wobei die Modifikationen am Funkzugangskommunikationsnetzwerk (100) Modifikationen an einem Strahlungsmuster von einer oder mehreren Antennen des Funkzugangskommunikationsnetzwerks (100) beinhalten.

9. Verfahren nach einem der vorhergehenden Ansprüche, wobei das Funkzugangskommunikationsnetzwerk (100) ein selbstorganisierendes Netzwerk, SON, ist, wobei letzteres eine Steuereinheit (110) umfasst, die dazu ausgelegt ist, die Modifikationen auf Basis der Berichtssignale (RS1, RS2, ..., RSn) automatisch anzuwenden.

10. Verfahren nach Anspruch 9, das das Versehen der Steuereinheit (110) mit einem künstlichen Geheimdienstagenten umfasst, wobei der letztere dazu ausgelegt ist, die Modifikationen am Funkzugangskommunikationsnetzwerk (100) auf Basis der Berichtssignale (RS1, RS2, ..., RSn) anzuwenden.

11. Verfahren nach einem der vorhergehenden Ansprüche, wobei das Verwalten des Funkzugangskommunikationsnetzwerks das Planen und/oder Organisieren des Funkzugangskommunikationsnetzwerks umfasst.

12. Funkzugangskommunikationssystem (200), das Folgendes umfasst:

- ein Funkzugangskommunikationsnetzwerk (100);

- eine Steuereinheit (110), die zu Folgendem ausgelegt ist:

- Empfangen, von jedem einer Mehrzahl von mobilen Benutzerendgeräten (UE1, UE2, ..., UEn) in einem bestimmten geografischen Gebiet (GA), von mindestens einem Berichtssignal (RS1, RS2, ..., RSn), das Folgendes beinhaltet,:

- ein erstes Datenelement (D1), das für eine geografische Position des mobilen Benutzerendgeräts (UE1, UE2, ..., UEn) repräsentativ ist;
- ein zweites Datenelement (D2), das für eine Leistung repräsentativ ist, mit der Übertragungssignale (TS), die vom Funkzugangskommunikationsnetzwerk (100) gesendet werden, vom mobilen Benutzerendgerät (UE1, UE2, ..., UEn) empfangen werden;

- Anstellen von ersten Vergleichen zwischen einer Leistung, mit der die Übertragungssignale (TS) übertragen werden, und den zweiten Datenelementen (D2) ;
- Bestimmen einer Funkabdeckungskarte (RCM) des bestimmten geografischen Gebiets (GA) auf Basis der ersten Datenelemente (D1) und der ersten Vergleiche;
- Anstellen eines zweiten Vergleichs zwischen der Funkabdeckungskarte (RCM) und Referenzdaten (Ref);
- Anwenden von Modifikationen auf das Funkzugangskommunikationsnetzwerk (100) auf Basis des zweiten Vergleichs,

wobei die Steuereinheit (100) zum Bestimmen der Funkabdeckungskarte (RCM) zu Folgendem ausgelegt ist:

Teilen des geografischen Gebiets (GA) in eine Mehrzahl von Pixeln (P1, P2, ..., Pk), von denen jedes mit jeweiligen geografischen Koordinaten verknüpft ist;
Verknüpfen von jeweiligen mobilen Benutzerendgeräten, deren geografische Position innerhalb eines solchen Pixels (P1, P2, ..., Pk) liegt, mit jedem Pixel (P1, P2, ..., Pk);
Bestimmen eines Funkabdeckungsparameters (RCP) für jedes Pixel (P1, P2, ..., Pk) auf Basis der zweiten Datenelemente (D2), die in den Berichtssignalen (RS1, RS2, ..., RSn) beinhaltet sind, die von den jeweiligen mobilen Benutzerendgeräten (UE1, UE2, ..., UEn) übertragen werden.

## Revendications

1. Procédé de gestion d'un réseau de communication d'accès radio (100), comprenant :

- la réception, depuis chacun d'une pluralité de terminaux utilisateur mobile (UE1, UE2, ..., UEn) dans une zone géographique déterminée (GA), d'au moins un signal de rapport (RS1, RS2, ..., RSn) comprenant :

- une première donnée (D1) représentative d'une position géographique dudit terminal utilisateur mobile (UE1, UE2, ...UEn) ;
- une seconde donnée (D2) représentative d'une puissance à laquelle des signaux de transmission (TS), envoyés par ledit réseau de communication d'accès radio (100), sont reçus par ledit terminal utilisateur mobile (UE1, UE2, ..., UEn) ;

- la réalisation de premières comparaisons entre une puissance à laquelle lesdits signaux de transmission (TS) sont transmis, et lesdites secondes données (D2) ;
- la détermination d'une carte de couverture radio (RCM) de ladite zone géographique déterminée (GA) sur la base desdites premières données (D1) et desdites premières comparaisons;
- la réalisation d'une seconde comparaison entre ladite carte de couverture radio (RCM) et des données de référence (Ref) ;
- l'application de modifications audit réseau de communication d'accès radio (100) sur la base de ladite seconde comparaison,

lequel procédé, lors de la détermination de ladite carte de couverture radio (RCM), comprend :

le découpage de ladite zone géographique (GA) en une pluralité de pixels (P1, P2, ..., Pk), chacun étant associé à des coordonnées géographiques respectives ;
l'association, à chaque pixel (P1, P2, ..., Pk), des terminaux utilisateur mobile respectifs dont la position géographique se trouve dans ledit pixel (P1, P2, ..., Pk) ;
la détermination d'un paramètre de couverture radio (RCP) pour chaque pixel (P1, P2, ..., Pk) sur la base des secondes données (D2) incluses dans les signaux de rapport (RS1, RS2, ..., RSn) transmis par lesdits terminaux utilisateur mobile respectifs (UE1, UE2, ..., UEn).

2. Procédé selon la revendication 1, lequel les données de référence (Ref) sont représentatives d'une couverture radio minimale acceptable dans au moins une partie de ladite zone géographique déterminée (GA).

3. Procédé selon la revendication 1 ou 2, lequel les signaux de rapport (RS1, RS2, ..., RSn) sont envoyés depuis lesdits terminaux utilisateur mobile (UE1, UE2, ..., UEn) selon la technologie Minimization of Drive Test, MDT.

4. Procédé selon la revendication 3, lequel les coordonnées géographiques associées à chaque pixel (P1, P2, ..., Pk) comprennent les coordonnées géographiques d'un centroïde dudit pixel (P1, P2, ..., Pk).

5. Procédé selon l'une quelconque des revendications précédentes, lequel le paramètre de couverture radio (RCP) d'un pixel déterminé (P1, P2, ..., Pk) est une fonction d'une ou plusieurs des variables suivantes :

   - une distance depuis une station de base radio (RBS) qui dessert ledit pixel déterminé (P1, P2, ..., Pk) et qui a reçu les signaux de rapport (RS1, RS2, ..., RSn) ;
   - une fréquence (f) à laquelle lesdits signaux de transmission (TS) sont transmis ;
   - un temps (t).

6. Procédé selon l'une quelconque des revendications précédentes, lequel le paramètre de couverture radio (RCP) d'un pixel déterminé (P1, P2, ..., Pk) est indicatif d'un affaiblissement de trajet électromagnétique entre une station de base radio (RBS) qui dessert ledit pixel déterminé (P1, P2, ..., Pk) et une position quelconque à l'intérieur dudit pixel déterminé (P1, P2, ..., Pk).

7. Procédé selon l'une quelconque des revendications précédentes,

   les étapes consistant à :

   - recevoir des signaux de rapport (RS1, RS2, ..., RSn) depuis des terminaux utilisateur mobile (UE1, UE2, ..., UEn) ;
   - réaliser les premières comparaisons ;
   - déterminer la carte de couverture radio (RCM) ;
   - réaliser la seconde comparaison ;
   - appliquer des modifications au réseau de communication d'accès radio (100) ;

   sont répétées dans le temps.

8. Procédé selon l'une quelconque des revendications précédentes, lequel les modifications audit réseau de communication d'accès radio (100) comprennent des modifications d'un diagramme de rayonnement d'une ou plusieurs antennes dudit réseau de communication d'accès radio (100).

9. Procédé selon l'une quelconque des revendications précédentes, lequel ledit réseau de communication d'accès radio (100) est un réseau auto-organisé, SON, ce dernier comprenant une unité de commande (110) configurée pour appliquer automatiquement lesdites modifications sur la base des signaux de rapport (RS1, RS2, ..., RSn).

10. Procédé selon la revendication 9, comprenant la fourniture à ladite unité de commande (110) d'un agent d'intelligence artificielle, ce dernier étant configuré pour appliquer lesdites modifications audit réseau de communication d'accès radio (100), sur la base desdits signaux de rapport (RS1, RS2, ..., RSn).

11. Procédé selon l'une quelconque des revendications précédentes, lequel la gestion du réseau de communication d'accès radio comprend la planification et/ou l'organisation dudit réseau de communication d'accès radio.

12. Système de communication d'accès radio (200), comprenant :

   - un réseau de communication d'accès radio (100) ;

- une unité de commande (110), configurée pour :
- recevoir, depuis chacun d'une pluralité de terminaux utilisateur mobile (UE1, UE2, ..., UEn) dans une zone géographique déterminée (GA), au moins un signal de rapport (RS1, RS2, ..., RSn) comprenant :

- une première donnée (D1) représentative d'une position géographique dudit terminal utilisateur mobile (UE1, UE2, ...UEn) ;
- une seconde donnée (D2) représentative d'une puissance à laquelle des signaux de transmission (TS), envoyés par ledit réseau de communication d'accès radio (100), sont reçus par ledit terminal utilisateur mobile (UE1, UE2, ..., UEn) ;
- réaliser des premières comparaisons entre une puissance à laquelle lesdits signaux de transmission (TS) sont transmis, et lesdites secondes données (D2) ;
- déterminer une carte de couverture radio (RCM) de ladite zone géographique déterminée (GA) sur la base desdites premières données (D1) et desdites premières comparaisons ;
- réaliser une seconde comparaison entre ladite carte de couverture radio (RCM) et des données de référence (Ref) ;
- appliquer des modifications audit réseau de communication d'accès radio (100) sur la base de ladite seconde comparaison,

lequel, afin de déterminer ladite carte de couverture radio (RCM), ladite unité de commande (100) est configurée pour :

- découper ladite zone géographique (GA) en une pluralité de pixels (P1, P2, ..., Pk), chacun étant associé à des coordonnées géographiques respectives ;
- associer, à chaque pixel (P1, P2, ..., Pk), des terminaux utilisateur mobile respectifs dont la position géographique se trouve dans ledit pixel (P1, P2, ..., Pk) ;

déterminer un paramètre de couverture radio (RCP) pour chaque pixel (P1, P2, ..., Pk) sur la base des secondes données (D2) incluses dans les signaux de rapport (RS1, RS2, ..., RSn) transmis par lesdits terminaux utilisateur mobile respectifs (UE1, UE2, ..., UEn).

FIG. 1

FIG. 2

## FIG. 3

```
┌─────────────────────────────────────┐
│     Identifying geographical area GA  │────1000
│   Dividing GA into pixels P1, P2,..., Pk │
└─────────────────────────────────────┘
                    │
                    ▼
┌─────────────────────────────────────┐
│     Sending transmission signals TS   │────1010
└─────────────────────────────────────┘
                    │
                    ▼
┌─────────────────────────────────────┐
│     Receiving report signals RS1-RSn  │────1020
└─────────────────────────────────────┘
                    │
                    ▼
┌─────────────────────────────────────┐
│     Associating pixels with respective │────1030
│          mobile user terminals         │
└─────────────────────────────────────┘
                    │
                    ▼
┌─────────────────────────────────────┐
│     Comparing D2 with transmission power │────1040
└─────────────────────────────────────┘
                    │
                    ▼
┌─────────────────────────────────────┐
│  Calculating radio coverage parameter RCP for │────1050
│         each pixel P1, P2, ..., Pk     │
└─────────────────────────────────────┘
                    │
                    ▼
┌─────────────────────────────────────┐
│     Calculating radio coverage map    │────1060
│                RCM                     │
└─────────────────────────────────────┘
                    │
                    ▼
┌─────────────────────────────────────┐
│  Comparing radio coverage map RCM     │────1070
│    with reference parameters Ref      │
└─────────────────────────────────────┘
                    │
                    ▼
         NO    ◇ Modifications needed? ◇────1080
                    │  YES
                    ▼
┌─────────────────────────────────────┐
│     Applying modifications to network │────1090
└─────────────────────────────────────┘
```

**REFERENCES CITED IN THE DESCRIPTION**

**Patent documents cited in the description**

- US 2020178085 A1

- WO 2019086099 A1

**Non-patent literature cited in the description**

- **I. SCHNEIDER**. Enhancement of the Okumura-Hata propagation model using detailed morphological and building data,. *Proceedings of PIMRC '96 - 7th International Symposium on Personal, Indoor, and Mobile Communications.*, 2002
- **MASAHARU HATA**. Empirical Formula for Propagation Loss in Land Mobile Radio Services,. *IEEE Transaction on Vehicular Technology*, 1990, vol. VT-29 (03)

- **A. SCALONI et al.** Multipath and Doppler Characterization of an Electromagnetic Environment by Massive MDT Measurements From 3G and 4G Mobile Terminals. *IEEE Access*, 21 January 2019, vol. 7, 13024-13034